# EUROPÄISCHE PATENTSCHRIFT

(11) **EP 1 338 615 B1**
(45) Veröffentlichungstag und Bekanntmachung des Hinweises auf die Patenterteilung: **07.04.2010**
(21) Anmeldenummer: 03002884.9
(22) Anmeldetag: 08.02.2003
(51) Int. Cl.: C08G 18/28, C08G 18/48, C08G 18/61, C08G 18/79, C09D 7/00

(54) **Verzweigte Polyurethane, diese enthaltende Formulierungen und deren Verwendung zur Verdickung wässriger Systeme**
Branched polyurethane, formulations containing these and their use in thickening aqueous systems
Polyuréthanes ramifiés, formulations contenant ces polyuréthanes ramifiés et leur utilisation pour épaissir des systèmes aqueux

(30) Priorität: 23.02.2002 DE 10207891
(43) Veröffentlichungstag der Anmeldung: 27.08.2003
(73) Patentinhaber: Evonik Goldschmidt GmbH, 45127 Essen (DE)
(72) Erfinder: Bauer, Sandra, 47269 Duisburg (DE); Edelmann, Dirk, Dr., 42477 Radevormwald (DE); Esselborn, Eberhard, 45147 Essen (DE); Hoschke, Markus, 30916 Isernhagen (DE); Link, Günter, 38855 Wernigerode (DE); Silber, Stefan, Dr., 47804 Krefeld (DE)

(56) Entgegenhaltungen:
- EP-A- 1 111 014
- US-A- 4 079 028

## Beschreibung

Die Erfindung betrifft neuartige, verzweigte, gegebenenfalls Siloxangruppen enthaltende Polyurethane, diese enthaltende Formulierungen und deren Verwendung zur Verdickung wässriger Systeme.

Eine Vielzahl von assoziativen Verdickern auf Polyurethanbasis ist bekannt. Dies sind lineare oder verzweigte, in der Regel nichtionische Tenside mit diskreten hydrophilen und hydrophoben Domänen. Typische Strukturen dieser Verbindungen, ihre Herstellung und Verwendung ist unter anderem in US-A-4 155 892 oder US-A-4 079 028 beschrieben.

Polyurethanverdicker der genannten Art und deren Zubereitungen eignen sich als Hilfsmittel für die Einstellung von rheologischen Eigenschaften wässriger Lacksysteme wie Auto- und Industrielacke, Putze und Bautenanstrichfarben, Druckfarben, Pigmentpasten, Füllstoffdispersionen oder kosmetischer Zubereitungen.

Diese Polyurethanverdicker werden hergestellt aus
(a) mindestens einem wasserlöslichen Polyetherpolyol,
(b) mindestens einem wasserunlöslichen organischen Polyisocyanat,
(c) mindestens einer monofunktionellen hydrophoben organischen Verbindung, ausgewählt aus Verbindungen mit einem gegenüber Isocyanaten aktiven Wasserstoffatom und organischen Monoisocyanaten und
(d) mindestens einem polyfunktionellen Alkohol oder polyfunktionellem Etheralkohol.

In der EP-A-307 775 werden wasserdispergierbare, modifizierte Polyurethanverdicker hergestellt aus
(a) einem Polyisocyanat,
(b) einem Polyetherpolyol,
(c) einem modifizierenden Agens mit mindestens 2 aktiven Wasserstoffatomen und mindestens einer hydrophoben Gruppe, wobei das modifizierende Agens keine Gruppen enthält, die mit Polyisocyanat oder dem Polyetherpolyol reagieren können, und
(d) einem endverkappenden Agens, wie beispielsweise alkoxylierten Alkoholen, offenbart.

In der US-A-4 327 008 werden sternförmige PU-Verdicker beschrieben, die Umsetzungsprodukte sind aus
(a) Polyetherdiolen,
(b) höherfunktionellen (> 3) Polyetherpolyolen oder Isocyanaten,
(c) einem Diisocyanat,
(d) bezogen auf das Polyetherdiol 37 bis 175 Molprozent Wasser sowie
(e) einem endverkappendem Monool oder Monoisocyanat.

Weitere Polyurethanverdickungsmittel sind in EP-A-0 031 777, EP-A-0 495 373, US-A-4 499 233, US-A-4 426 485, DE-A-41 01 239 und US-A-5 023 309 beschrieben.

In US-A-4 079 028 werden verzweigte Polyurethanverdickungsmittel beschrieben, die Umsetzungsprodukte sind aus: trifunktionellen Isocyanaten, einem Dodecylalkohol(EO)-Addukt und 6000 Molekulargewicht Polyethylenglykol.

Allen diesen Polyurethanen des Standes der Technik ist gemeinsam, dass hydrophile Segmente in einer Menge von mindestens 50 Gew.-%, und höchstens 10 Gew.-% an hydrophoben Segmenten und Urethangruppen vorliegen. Unter hydrophilen Segmenten sind hierbei insbesondere hochmolekulare Polyetherketten, die insbesondere aus Ethylenoxidpolymeren bestehen, zu verstehen. Unter hydrophoben Segmenten sind insbesondere Kohlenwasserstoffketten mit mindestens sechs Kohlenstoffatomen zu verstehen.

Dem Fachmann ist geläufig, dass Verdicker mit guter Wirksamkeit nur erhalten werden können, wenn die hydrophilen Polyethersegmente ein Molekulargewicht von mindestens 6.000 g/mol aufweisen und fast ausschließlich aus Polyethylenoxid bestehen; die hydrophoben Segmente mindestens 12 Kohlenstoffatome aufweisen, sowie hydrophile und hydrophobe Segmente in einem ausgewogenen Gewichtsverhältnis von 92 bis 97 % zu 8 bis 3 % vorliegen.

Darüberhinaus sollten diese Polyurethane eine möglichst geringe Eigenviskosität aufweisen, damit sie, gegebenenfalls in Form möglichst hochkonzentrierter Lösungen, problemlos gehandhabt und verarbeitet werden können.

Diese Forderung verbietet beispielsweise die naheliegende Herstellung von langen hydrophilen Segmenten durch kettenverlängernde Umsetzung von vergleichsweise niedermolekularen Polyetherdiolen mit Diisocyanaten, weil die damit verbundene höhere Zahl der Urethangruppen eine unerwünschte Erhöhung der Eigenviskosität zur Folge hat.

In jüngster Zeit wurden zahlreiche Versuche unternommen, die Eigenviskosität der Verdickungsmittel herabzusetzen. Dem Fachmann ist jedoch geläufig, dass die bloße Molekulargewichtserniedrigung mit einer Verschlechterung der Verdickerwirksamkeit einhergeht.

Eine andere Möglichkeit beruht auf dem Zusatz typischer Emulgatorstrukturen (DE-A-196 00 467), insbesondere auch Acetylendiolderivaten (EP-A-0 618 243). Auch das zusätzliche Hinzufügen von Diestern ist beschrieben (DE-A-196 44 933).

Die so hergestellten Verbindungen haben zunächst den Nachteil, dass sie in hohen Konzentrationen eingesetzt werden müssen, um eine zufriedenstellende Reduktion der Eigenviskosität des Verdickers zu erreichen. Zudem sind hiermit eine Reihe weiterer Nachteile verbunden, wie die durch diese Tenside hervorgerufene Schaumstabilisierung der diese Verdickerzubereitungen enthaltenden wässrigen Systeme, wie beispielsweise dispersionsbasierende Bautenfarben. Weiterhin wird in unerwünschter Weise die Wasser- und Witterungsbeständigkeit von Beschichtungssystemen sowie, im Falle von Bautenfarben, deren Scheuerbeständigkeit herabgesetzt.

Eine weitere gängige, literaturbekannte Methode, die Eigenviskosität wässriger Lösungen der Polyurethane zu reduzieren, ist der Zusatz von wasserlöslichen oder wassermischbaren Lösungsmitteln, wie beispielsweise Alkoholen oder Glycolderivaten. Entscheidender Nachteil dieser Methodik ist, dass hiermit in unerwünschtem Maße Lösemittel in umweltverträgliche Beschichtungssysteme eingetragen werden, was dem Gedanken der VOC-Reduktion zuwiderläuft.

Es ist bekannt, dass die geschilderten Probleme verstärkt bei den angestrebten extrem strukturviskosen, verzweigten Polyurethanverdickern auftreten.

Der vorliegenden Erfindung lag daher die Aufgabe zugrunde, neue, zu extremen Strukturviskositäten führende Polyurethanverdicker und daraus hergestellte schaumarme und VOC-freie Zubereitungen zur Verfügung zu stellen, die leicht handhabbar und dosierbar sind, eine geringe Eigenviskosität bei extrem verdickender Wirkung besitzen, sowie insbesondere keine negativen Beeinträchtigungen finaler Beschichtungseigenschaften wie Scheuerbeständigkeiten und Witterungsbeständigkeiten zeigen.

Diese Aufgabe wird überraschenderweise gelöst durch verzweigte, gegebenenfalls Siloxangruppen enthaltende Polyurethane herstellbar durch Umsetzung von
A) einem oder mehreren mindestens trifunktionellen aliphatischen und/oder aromatischen Isocyanat
   mit
B) 90,0 bis 99,8 Val-% einem oder mehreren Polyethern der Struktur

   RO(SO)w(BO)x(PO)y(EO)zH

   und
C) 0,2 bis 10,0 Val-% mindestens einer der Verbindungen aus der Gruppe
   a. Polyethern der Struktur HO(SO)w'(BO)x'(PO)y'(EO)z'H
   b. Polyetherpolydimethylsiloxandiole der Struktur HO(SO)w'(BO)x'(PO)y'(EO)z'Z-PDMS-Z(EO)z'(PO)y'(BO)x'(SO)w'OH
   c. Polyesterpolydimethylsiloxandiole der Struktur H-(OC₅H₁₀CO-) y'-Z-PDMS-Z- (CO-C₅H₁₀O-) y'-H
   d. Polydimethylsiloxandiolen der Struktur HO-Y-PDMS-Y-OH
   e. Polydimethylsiloxandiaminen der Struktur R'NH-Y-PDMS-Y-HNR'
   f. Polyetherdiaminen der Struktur R'HN-(PO)y'(EO)z'-X-(EO)z'(PO)y'-NHR'
worin
- R: ein gegebenenfalls auch substituierter oder funktionalisierter Kohlenwasserstoffrest mit 1 bis 50 Kohlenstoffatomen,
- R': Wasserstoff oder ein gegebenenfalls auch substituierter oder funktionaliserter Kohlenwasserstoffrest mit 1 bis 8 Kohlenstoffatomen,

- SO =: Styrenoxid,
- BO =: Butylenoxid,
- PO =: Propylenoxid,
- EO =: Ethylenoxid,
- PDMS =: Polydimethylsiloxan

- w =: 0 bis 5,
- x =: 0 bis 5,
- y =: 0 bis 20,
- z =: 50 bis 200,

- w'=: 0 bis 5,
- x'=: 0 bis 5,
- y'=: 0 bis 10,
- z'=: 1 bis 49,

- Z =: -CₙH₂ₙO- oder -CH₂-CH₂-O-CₙH₂ₙO-, mit n = 2 bis 12;
- X =: -CₙH₂ₙ- oder -C₆H₄- , mit n = 2 bis 12;
- Y =: -CₘH₂ₘ-, worin m = 1 bis 8 ist.

In einer bevorzugten Ausführungsform ist R ein gegebenenfalls substituierter Kohlenwasserstoffrest mit 8 bis 22 C-Atomen.

In einer weiteren bevorzugten Ausführungsform ist R ein gegebenenfalls substituierter Kohlenwasserstoffrest mit 10 bis 18 C-Atomen.

In einer weiteren bevorzugten Ausführungsform ist R ein gegebenenfalls substituierter Kohlenwasserstoffrest mit 16 bis 18 C-Atomen ist.

In einer weiteren bevorzugten Ausführungsform weisen die Indices folgende Werte auf:
w = 0 bis 2,
x = 0 bis 3,
y = 0 bis 10,
z = 50 bis 200.

In einer weiteren bevorzugten Ausführungsform weisen die Indices folgende Werte auf:
w = 0,
x = 0,
y = 0,
z = 80 bis 150.

In einer weiteren bevorzugten Ausführungsform weisen die Indices folgende Werte auf:
w' = 0 bis 2,
x' = 0 bis 2,
y' = 0 bis 10,
z' = 5 bis 30.

In einer weiteren bevorzugten Ausführungsform beträgt der Index n in Z 2 bis 6.

In einer weiteren bevorzugten Ausführungsform beträgt der Index n in Y 3 bis 6.

In einer weiteren bevorzugten Ausführungsform stellt R' ein Wasserstoff, eine Methyl- oder Ethylgruppe dar.

In einer weiteren bevorzugten Ausführungsform stellt R' ein Wasserstoff dar.

In einer weiteren bevorzugten Ausführungsform ist das Triisocyanat ein Abkömmling des Hexamethylendiisocyanates oder des Toluylendiisocyanates oder des Isophorondiisocyanates.

In einer weiteren bevorzugten Ausführungsform ist das Triisocyanat ein Abkömmling des Isophorondiisocyanates ist.

Diese Polyurethane können nach dem Stand der Technik (US-A-4 155 892) entsprechenden Verfahren hergestellt werden.

Basis sind mindestens trifunktionelle aliphatische oder aromatische Isocyanate oder Isocyanatoligomerisate, wobei auch Gemische dieser Verbindungen eingesetzt werden können.

Die Struktur der erfindungsgemäß mitverwendeten trifunktionellen Isocyanate hat auf die Verdickungseigenschaften keinen wesentlichen Einfluss. Sie sind als handelsübliche Produkte unter den jeweiligen Handelsnamen erhältlich, wie beispielsweise:
Aliphatische Triisocyanate:
   Vestanat® T 1890-100 (Fa. Degussa); Desmodur® N 100 (Fa. Bayer); Desmodur® N 3200; Desmodur® N 3300; Desmodur® N 3600; Desmodur® 4470 SN;
Aromatische Isocyanate:
   Desmodur® IL; Desmodur® L; Suprasec® DNR (Fa. Huntsman).

Bevorzugt ist die Verwendung aliphatischer Strukturen, insbesondere die Verwendung von Hexamethylendiisocyanat(HDI)-Oligomeren, wie beispielsweise Desmodur® N.

Diesen mindestens trifunktionellen Isocyanaten können zur Regelung der Viskosität geringe Mengen, 0 bis 20 Val-%, an entsprechenden Diisocyanaten und/oder Monoisocyanaten zugesetzt werden.

Die Isocyantkomponente (A) wird zunächst mit 90 bis 99,8 Val-% der Monoolkomponenten (B) der Struktur RO(SO)w(BO)x(PO)y(EO)zH nach an sich bekannten Verfahren umgesetzt.

Von wesentlicher Bedeutung für die Eigenschaften der Verbindungen sind die Reste R sowie die Zahlenwerte der Indices w, x, y und z.
- R: ist ein gegebenenfalls auch substituierter Kohlenwasserstoffrest mit 1 bis 50 Kohlenstoffatomen. Bevorzugt sind Reste mit 12 bis 22 Kohlenstoffatomen, insbesondere bevorzugt sind C₁₈-Derivate. Im Falle kürzerer Kohlenwasserstoffreste fungieren die Alkylenoxideinheiten, Styreneoxid (SO) oder Butylenoxid (BO) als Hydrophobsegmente.

Die Summe der Ethylenoxidreste
- (z): ist 50 bis 200, vorzugsweise 100 bis 200, insbesondere bevorzugt 110 bis 150.

Die Summe der Propylenoxidreste
- (y): ist 0 bis 20, bevorzugt 0 bis 10, insbesondere bevorzugt 0 bis 5.

Die Summe der Butylenoxidreste
- (x): ist 0 bis 5, bevorzugt 0 bis 3, insbesondere bevorzugt 0 bis 1.

Die Summe der Styrenoxidreste
- (w): ist 0 bis 5, bevorzugt 0 bis 3, insbesondere bevorzugt 1.

Es ist dem Fachmann geläufig, dass diese Indices statistische Mittelwerte darstellen und alle Verbindungen in Form eines Gemisches einer im wesentlichen durch statistische Gesetze geregelten Verteilung vorliegen.

Auch können Gemische verschiedener Monoolkomponenten eingesetzt werden. Diese Polyethermonoole werden gleichsam nach dem Stand der Technik entsprechenden Verfahren durch Anlagerung von aromatischen und/oder aliphatischen Oxiranverbindungen an monofunktionelle Alkohole hergestellt. Die Anlagerung der verschiedenen Alkylenoxide kann dabei blockweise oder statistisch erfolgen; eine blockweise Anordnung ist bevorzugt.

Zeitgleich, oder vorzugsweise in einer zweiten Reaktionsstufe, werden dem Reaktionsgemisch 0,2 bis 10,0 Val-% mindestens eine der Diol- oder Diaminkomponenten (C) zugeführt.
- (C) (a) :: Bei den Polyetherdiolen der Struktur

HO(SO)w'(BO)x'(PO)y'(EO)z'

-X-(EO)z'(PO)y'(BO)x'(SO)w'H,

ist die Summe der Ethylenoxidgruppierungen
z' 1 bis 49, vorzugsweise 10 bis 40; der Styrenoxidmonomere
w' 0 bis 5, vorzugsweise 1; der Butylenoxidmonomere
x' 0 bis 5, vorzugsweise 1; der Propylenoxidmonomere
y' 0 bis 10, vorzugsweise 3.

Diese Indices stellen gleichsam wiederum statistische Mittelwerte dar, die Anlagerung der verschiedenen Alkylenoxidmonomere kann statistisch oder wiederum blockweise erfolgen. Der Rest X ist der Rest -CₙH₂ₙ- oder -C₆H₄- eines aromatischen, araliphatischen oder aliphatischen Diols HO-X-OH, vorzugsweise Ethylenglycol, Propylenglycol, Butandiol, Cyclohexandimethanol, Dihydroxybenzol, Dihydroxydiphenylmethan.
- (C) (b) :: Bei den Polyetherpolydimethylsiloxandiolen der Struktur

H(SO)w'(BO)x'(PO)y'(EO)z'

Z-PDMS-Z-(EO)z'(PO)y'(BO)x'(SO)w'H,

ist die Summe der Ethylenoxidgruppierungen
z' 0 bis 49, vorzugsweise 5 bis 30; der Styrenoxidmonomere
w' 0 bis 5, vorzugsweise 1; der Butylenoxidmonomere
x' 0 bis 5, vorzugsweise 1; der Propylenoxidmonomere
y' 0 bis 30, vorzugsweise 3 bis 15;

Die Anzahl der Dimethylsiloxy-Einheiten in der Kette der Polyethersiloxandiole (C)(b) beträgt 2 bis 100, bevorzugt 10 bis 60. Es ist auch möglich, die Dimethylsiloxy-Einheiten durch Phenylmethylsiloxy-Einheiten ganz oder teilweise auszutauschen. Die Struktureinheit Z richtet sich nach der Art des zur Polyether Synthese verwendeten Alkohols. Bevorzugt verwendet werden die Alkohole Allylalkohol, Butenol oder Hexenol oder auch die Monovinylether von Diolen.

Formel für ein unter Zusatz von (B) und (C)(b) hergestelltes Produkt: 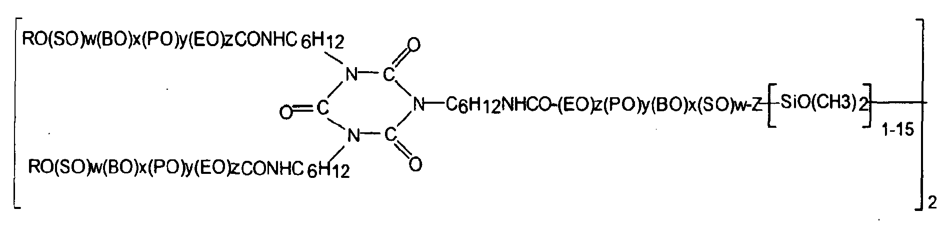
- (C) (c) :: Die Polyesterpolydimethylsiloxandiole der Struktur

H- (OC₅H₁₀CO-)_{y'}-Z-PDMS-Z-(CO-C₅H₁₀O-)_{y'}-H

können ganz oder auch teilweise die Polyethersiloxandiole (C)(b) ersetzen. Die Wahl richtet sich nach dem Anwendungszweck der herzustellenden Verdickungsmittel. Der Index y', der die Anzahl der Polyestergruppen repräsentiert, beträgt 1 bis 10 vorzugsweise 6. Die Struktureinheit Z richtet sich nach der Art des zur Hydrosilylierung verwendeten Alkohols. Bevorzugt verwendet werden die Alkohole Allylalkohol, Butenol oder Hexeneol oder auch die Monovinylether von Diolen.
- (C)(d):: In den mitverwenbaren Polydimethylsiloxandiolen der Struktur

H-Z-PDMS-Z-H

beträgt die Anzahl der Dimethylsiloxy-Einheiten in der Kette 2 bis 100, bevorzugt 10 bis 60. Es ist auch möglich, die Dimethylsiloxy-Einheiten durch Phenylmethylsiloxy-Einheiten ganz oder teilweise auszutauschen. Die Struktureinheit Z ist abhängig von der Art des zur Hydrosilylierung verwendeten Alkohols. Bevorzugt verwendet werden die Alkohole Allylalkohol, Butenol oder Hexeneol oder auch die Monovinylether von Diolen.
- (C)(e):: Die Anzahl der Dimethylsiloxy-Einheiten in der Kette der Polydimethylsiloxandiamine der Struktur

R'NH-Y-PDMS-Y-HNR'

beträgt 2 bis 100, bevorzugt 10 bis 60. Es ist auch möglich, die Dimethylsiloxy-Einheiten durch Phenylmethylsiloxy-Einheiten ganz oder teilweise auszutauschen. Bei Verwendung eines Aminosiloxans besteht die Struktureinheit Y aus dem Rest des zur Hydrosilylierung verwendeteten ungesättigten Amins. Besonders bevorzugte Amine sind Allylamin, Methallylamin oder N-Methylallylamin
- (C) (f) :: Schließlich können Polyetherdiamine der allgemeinen Struktur

R'NH-(PO)y'(EO)z'-X-(EO)z'(PO)y'-NHR

mitverwendet werden. Der Wert z', der die Anzahl der Ethylenoxideinheiten repräsentiert, beträgt 1 bis 49, bevorzugt 2; Der Wert y', der die Anzahl der Propylenoxideinheiten repräsentiert, beträgt 0 bis 10, bevorzugt 3. Der Rest X ist der Rest eines aromatischen, araliphatischen oder aliphatischen Diols HO-X-OH, vorzugsweise werden die Diole Ethylenglycol, Propylenglycol, Butandiol, Cyclohexandimethanol, Dihydroxybenzol oder Dihydroxydiphenylmethan verwendet.

Die genannten Indices stellen statistische Mittelwerte dar, die Kettenlängenverteilung richtet sich nach der Art der gewählten Herstellmethode. Dies ist dem Fachmann geläufig und nicht Gegenstand der Anmeldung.

### Ausführungsbeispiele:

Die Polyurethane wurden in Anlehnung an das in der US-PS-4 155 892 beschriebene Verfahren hergestellt.

### Synthese von Polyurethanen:

### Beispiel A1:

### Rohstoffe:

1,05 mol Desmodur® N, 22,0 % NCO, Molekulargewicht = 572 g/mol, 97 Val % eines Laurylalkohol gestarteten Polyethers, alkoxyliert mit 2 mol SO und 100 mol EO; MG lt. OHZ = 4.600 g/mol. 1 Val-% eines Butandiol gestarteten Polyethers, alkoxyliert mit 5 mol EO und 5 mol BO; MG lt. OHZ = 638 g/mol und 2 Val-% des Polyethersiloxans "Tego® Foamex 840"; MG lt. OHZ = 5.220 g/mol.

### Durchführung:

97 Val-% entsprechend 13.386 g des Laurylalkohol gestarteten Polyethers mit dem Molekulargewicht 4.600 g/mol (die Molekulargewichte werden aus der OH-Zahl berechnet), 1 Val-% entsprechend 3,2 g des Butandiol gestarteten Polypropylen-butylenglykols mit dem Molekulargewicht 638 g/mol und 2 Val-% des Polyethersiloxans "Tego® Foamex 840" mit dem Molekulargewicht 5 200 g/mol werden in den trockenen Reaktor unter N₂ vorgelegt. Zur Entwässerung der Polyethermischung werden die Produkte im Reaktionsbehälter auf 110 °C aufgeheizt und unter Vakuum (< 15 mm) und einem leichten Stickstoffstrom bis zu einem Wassergehalt (nach Karl Fischer) < 0,03 % entwässert. Nach erfolgter Trocknung lässt man den Ansatz auf 80 °C abkühlen. Nun werden 600 g Desmodur® N, entsprechend 1,05 mol, d.h., mit einem NCO-Index von 1,05 zu der flüssigen Reaktionsmischung gegeben.

Zunächst wird das Desmodur® N innig mit den OH-funktionellen Komponenten vermischt. Dann erfolgt die Zugabe von 5 g Dibutylzinndilaurat; dabei ist eine leichte exotherme Reaktion zu erkennen, der Temperaturanstieg beträgt ca. 10 °C. Die Viskosität steigt im Laufe der Zeit merklich an. Nach 6 Std erfolgt eine Reaktionskontrolle über die Bestimmung des NCO-Gehaltes. Bei einem NCO-Wert von < 0,01 % ist die Reaktion weitestgehend abeschlossen.
Man erhält ein bei Raumtemperatur festes, leicht zerbrechliches Wachs. Im gemahlenen Zustand ist es ohne zusammenzusintern lagerfähig und von heller Farbe.

### Beispiel A2:

### Rohstoffe:

1,05 mol Desmodur® N, 95 Val-% eines Stearylalkohol gestarteten Polyethers, alkoxyliert mit 3 mol BO und 80 mol EO; MG lt. OHZ 3.230 g/mol.
3 Val-% eines Butandiol gestarteten Polyethers alkoxyliert mit 1,5 mol PO und 6 mol EO; MG lt. OHZ 410 und 2 Val-% des Polyethersiloxans "Tego® Glide 440" mit einem MG lt. OHZ von 2.900 g/mol.

### Durchführung in 2 Stufen:

95 Val-% entsprechend 9.690 g des Stearylalkohol gestarteten Polyethers mit dem Molekulargewicht 3.400 g/mol (die Molekulargewichte werden aus der OH-Zahl berechnet) werden in den trockenen Reaktor unter N₂ vorgelegt.
Zur Entwässerung des Polyethers werden die Produkte im Reaktionsbehälter auf 110 °C aufgeheizt und unter Vakuum (< 15 mm) und einem leichten Stickstoffstrom bis zu einem Wassergehalt (nach Karl Fischer) < 0,03 % entwässert. Nach erfolgter Trocknung lässt man den Ansatz auf 80 °C abkühlen. Nun werden 600 g Desmodur® N, entsprechend 1,05 mol, d.h., mit einem NCO-Index von 1,05 zu der flüssigen Reaktionsmischung gegeben.

Zunächst wird das Desmodur® N mit den OH-funktionellen Komponenten innig vermischt. Dann erfolgt die Zugabe von 4 g Dibutylzinndilaurat; dabei ist eine leichte exotherme Reaktion zu erkennen, der Temperaturanstieg beträgt ca. 10 °C. Die Raktionsmischung ist noch sehr flüssig.

Nach einer Vorreaktionszeit von 1 Stunde erfolgt die Zugabe der zuvor getrockneten Diolkomponenten. Mittels einer Dosiereinrichtung werden 1 Val-% entsprechend 6,15 g des Butandiol gestarteten Polypropylenpolyethylenglykols mit dem Molekulargewicht 410 g/mol und 2 Val-% entsprechend 29 g des Polyethersiloxans "Tego® Glide 440" mit dem Molekulargewicht von 2.900 g/mol in den geschlossenen Reaktor dosiert. Aufgrund der geringen molaren Menge ist keine Exothermie zu beobachten. Durch die Zugabe der Diolkomponenten steigt die Viskosität sichtbar an. Nach 6 Std. erfolgt eine Reaktionskontrolle über die Bestimmung des NCO-Gehaltes. Bei einem NCO-Wert von < 0,01 % ist die Reaktion weitestgehend abgeschlossen. Man erhält ein bei Raumtemperatur festes, leicht zerbrechliches Wachs. Im gemahlenen Zustand ist es ohne zusammenzusintern lagerfähig und von heller Farbe.

In analoger Weise werden nach dem Stand der Technik entsprechenden Verfahren folgende Verbindungen hergestellt.

### Beispiel A3:

Gemäß Synthese von Polyurethan A1 wird aus 1,05 mol Desmodur® N, 93 Val-% eines Stearylalkohol gestarteten Polyethers, alkoxyliert mit 100 mol EO; MG lt. OHZ 4.500 g/mol, 4 Val-% eines Propylenglykol gestarteten Polyethers, alkoxyliert mit 5 mol EO und 3 mol SO; MG lt. OHZ 610 g/mol und 3 Val-% des Polysiloxandiols "Tego HSi-2111" mit dem Molekulargewicht 810 g/mol ein Polyurethan hergestellt.

Das Reaktionsprodukt ist nach dem Abkühlen ein festes, leicht zerbrechliches Wachs.

### Beispiel A4:

Gemäß Synthese von Polyurethan A1 wird aus 1,05 mol Desmodur® N, 96 Val-% eines Stearylalkohol gestarteten Polyethers, alkoxyliert mit 100 mol EO; MG lt. OHZ 4.500 g/mol, 2 Val-% eines Propylenglykol gestarteten Polyethers, alkoxyliert mit 5 mol EO und 5 mol SO; MG lt. OHZ 830 g/mol und 2 Val-% des Polysiloxandiols "Tego® Glide 440" mit dem Molekulargewicht 2.900 g/mol ein Polyurethan hergestellt.

Das Reaktionsprodukt ist nach dem Abkühlen ein festes, leicht zerbrechliches Wachs.

Zu Vergleichszwecken wurde das nichterfindungsgemäße Produkt nach Beispiel A5 synthetisiert:

### Beispiel A5:

Gemäß Synthese von Polyurethan A1 wird aus 1,05 mol Desmodur® N und 100 Val-% eines Stearylalkohol gestarteten Polyethers, alkoxyliert mit 100 mol EO; MG lt. OHZ 4.500 g/mol ein Polyurethan hergestellt.

Das Reaktionsprodukt ist nach dem Abkühlen ein festes, leicht zerbrechliches Wachs.

### Formulierung der Polyurethane:

Die Formulierungen der erfindungsgemäßen Polyurethane A setzen sich zusammen aus
(a) 10 bis 40 Gew.-T der zuvor beschriebenen Polyurethane A,
(b) 0 bis 80 Gew.-T Wasser,
(c) 0 bis 30 Gew.-T Colösemittel,
(d) 10 bis 80 Gew.-T eines Emulgators.

Die Gew.-Teile werden so gewählt, dass die Summe immer 100 ist. Diese Formulierungen (B) sind ausgezeichnet verwendbar zum Verdicken handelsüblicher wässriger Bindemittelsysteme.

Als Colösemittel können die auf diesem Gebiet bekannten Verbindungen wie insbesondere Alkohole und Glykolether mitverwendet werden.

Als Emulgatoren sind die auf diesem Gebiet üblichen Produkte mitverwendbar. Diese haben jedoch zum Teil den Nachteil, dass sie toxikologisch bedenklich sind (Nonylphenolethoxilate) und im Finalprodukt unerwünschte Eigenschaften, wie z.B eine verminderte Nassscheuerbeständigkeit hervorrufen. Ein wesentlicher Nachteil der bekannten niedermolekularen Substanzen ist deren mehr oder minder leichte Flüchtigkeit. Diese Verbindungen, bekannt als sogenannte VOC's, sind in Beschichtungen, Überzugsmitteln, Lacken und Anstrichen nicht mehr erwünscht.

Erfindungsgemäß werden daher vorzugsweise Verbindungen der allgemeinen Struktur

R''(SO)w''(BO)x''(PO)y''(EO)z''H

mitverwendet, worin bedeuten
R" ein gegebenenfalls substituierter Kohlenwasserstoffrest mit 1 bis 22, vorzugsweise 4 bis 12 Kohlenstoffatomen,
EO ein divalenter Rest des Ethylenoxids,
PO ein divalenter Rest des Propylenoxids,
BO ein divalenter Rest des Butylenoxids,
SO ein divalenter Rest des Styrenoxids,
w" 1 bis 5,
x'' 0 bis 5,
y" 0 bis 5 und
z" 3 bis 30.

Vorzugsweise weisen die Indices folgende Werte auf:
w" = 1 bis 3,
x" = 0,
y" = 0 bis 2,
z" = 5 bis 30.

Diese Polyether liegen wiederum in Form eines Gemisches in einer im wesentlichen durch statistische Gesetze geregelten Verteilung vor und werden nach den bekannten Verfahren hergestellt.

Die Anordnung der verschiedenen Alkylenoxidmonomere kann statistisch oder blockweise erfolgen, wobei die blockweise Anordnung bevorzugt ist, insbesondere diejenige, in der das Styrenoxid direkt auf den Startalkohol R"OH aufpolymerisiert wird. Mit zunehmendem Gehalt an Styrenoxid setzen diese Emulgatoren die Eigenviskosität drastisch herab.

Besonders bevorzugt ist ein Emulgator mit einer dem Nonylphenol ähnlichen Struktur, bestehend aus dem Startalkohol Iso-Nonanol (Isomerengemisch 3,5,5-Trimethylhexanol-1) welcher mit 1,2 mol Styrenoxid und 10 mol Ethylenoxid alkoxyliert wurde. Im Folgenden wird dieses Produkt mit "Emulgator E", gekennzeichnet.

Die Herstellung der erfindungsgemäßen Formulierungen ist unkritisch und kann in an sich bekannter Weise erfolgen. So kann beispielsweise die Komponente (d) unter Rühren und gegebenenfalls unter Erwärmen zu dem in Wasser dispergierten Polyurethanverdicker (a) zugegeben werden. Idealerweise erfolgen diese Schritte unmittelbar nach Herstellung des Polyurethanverdickers.

### Beispiele für Formulierungen B:

Zu dem 80 °C warmen Polyurethan werden unter gutem Vermischen der Emulgator E, das Colösemittel und des Weiteren gegebenenfalls das Wasser zugegeben.

**Tabelle 1:**

| Formulierung | PUR aus Beispiel | Gew.-% PUR | Gew.-% Emulgator E | Gew.-% Colösemittel (Propylenglykol) | Gew.-% Wasser |
|---|---|---|---|---|---|
| B1 | A1 | 20 | 0 | 30 | 50 |
| B2 | A2 | 20 | 30 | 5 | 45 |
| B3 | A3 | 20 | 35 | 5 | 40 |
| B4 | A4 | 20 | 30 | 5 | 45 |
| B5 | A5 | 20 | 30 | 5 | 45 |
| B6 | A1 | 20 | 30 | 5 | 45 |
| B7 | A1 | 20 | 40 | 5 | 35 |
| B8 | A1 | 20 | 10 | 20 | 50 |
| B9 | A1 | 20 | 60 | 20 | 0 |

Die Viskositäten der so erhaltenen Lösungen wurden im Haake-Viskosimeter RV 12, Meßkörper SV DIN, bei 23 °C und 10,3 s-1 nach den Angaben des Herstellers gemessen und sind in Tabelle 2 in der Maßeinheit mPa*s aufgeführt.

**Tabelle 2:**

| Formulierung | Viskosität bei 23 °C und 10,3 s-1 |
|---|---|
| B1 | pastös |
| B2 | 1550 |
| B3 | 1800 |
| B4 | 1620 |
| B5 | 1200 |
| B6 | 710 |
| B7 | 1460 |
| B8 | 3800 |
| B9 | 520 |

Die nachfolgenden anwendungstechnischen Beispiele unter Verwendung handelsüblicher Farbenformulierungen zeigen, dass die verdickende Wirkung der erfindungsgemäßen Polyurethankomponente A) in den wässrigen Formulierungen durch den viskositätserniedrigenden Zusatz des "Emulgators E" in der Bautenfarbenrezeptur nicht beeinträchtigt wird.

### Anwendungstechnische Beispiele:

Formulierung einer Bautenfarbe auf Basis der Acrylat-Styrol-Dispersion "Acronal® 290 D"

**Tabelle 3:**

| Produkt/Hersteller | Einwaage in g |
|---|---|
| Wasser | 265,5 |
| Calgon® N (Bankiser GmbH) 10 %ig in Wasser [Polyphosphat] | 2,0 |
| Erfindungsgemäßer Verdicker (Formulierung B) | 8,5 |
| Foamex® 8030 (Goldschmidt, Tego Chemie Service), [Polyethersiloxan-Entschäumer] | 1,0 |
| Walocel® XM 30000 (Wolf Walsrode AG) [Celluloseether] | - |
| NaOH 25 %ig | 1,0 |
| Dispex® N 40 (Allied Colloids Ltd) [Polyacrylat, Dispergierhilfsmittel] | 5,0 |
| Dowanol® PnB (Dow Chemical) [Dipropylenglykolmonobutylether, Colösemittel] | 5,0 |
| Preventol® D6 (Bayer AG) [Konservierungsmittel] | 2,0 |
| Bayertitan® RKB-5 (Bayer AG) [Titandioxid] | 57,0 |
| Socal® P2 (Solvay Alkali GmbH) [Füllstoff] | 80,0 |
| Microtalc AT 200 (Norwegian Talcum) [Talkum] | 91,0 |
| Omyalite® 90 (Plüss Staufer AG) [Füllstoff] | 125,0 |
| Omyacarb® 5 GU (Plüss Staufer AG) [Füllstoff] | 297,0 |
| Acronal® 290D, (BASF) Styrol-Acrylat-Dispersion [Bindemittel] | 60 |
| Gesamt | 1000 |

Die Bautenfarbe auf Basis von Acronal® 290 D wird mit der genannten Menge an Verdickungsmittel versetzt. Nach einem Tag Ruhezeit erfolgt die Bestimmung der Viskosität.

Die Viskositäten der so erhaltenen Lösungen wurden im Haake-Viskosimeter RV 12, Meßkörper SV DIN, bei 23 °C und 10,3 s-1 nach den Angaben des Herstellers gemessen und sind in Tabelle 4 in der Maßeinheit mPa*s aufgeführt.

**Tabelle 4:**

| Verdickungsmittel aus Beispiel | Viskosität 10,3*sec⁻¹ | Viskosität 100*sec⁻¹ | Viskosität 600*sec⁻¹ |
|---|---|---|---|
| 1B | 6900 | 2500 | 980 |
| 2B | 8600 | 3100 | 1200 |
| 3B | 7500 | 2600 | 960 |
| 4B | 6300 | 2200 | 870 |
| 5B | 1100 | 470 | 230 |
| 6B | 4100 | 2000 | 1250 |
| 7B | 6400 | 2210 | 1000 |
| 8B | 4800 | 2800 | 1640 |
| 9b | 4300 | 2050 | 1270 |
| Vergleich: Borchigel® L 76 (Fa.Borchers) | 330 | 125 | 80 |
| Vergleich: PW 25 (Fa. Borchers) | 990 | 320 | 313 |

Formulierung einer Bautenfarbe auf Basis von "Rhoplex® AC-347" Emulsion

**Tabelle 5:**

| Produkt/Hersteller | Einwaage in g |
|---|---|
| Propylenglycol (BASF) [Colösemittel] | 5,26 |
| Tamol® 165 (Rohm & Haas) [Polyacrylat Dispergierhilfsmittel] | 0,86 |
| TEGO® Foamex 805 (Goldschmidt, Tego Chemie Service) [Polyethersiloxan-Entschäumer] | 0,10 |
| Kathon® LX 1,5 % (Rohm & Haas) [Biozid] | 0,17 |
| Ti-Pure® R 706 (Du Pont) [Titandioxid] | 19,46 |
| Minex® TM 10 (Unimin) [Füllstoff] | 1,95 |
| Wasser | 1,01 |
| Ammoniaklösung 28 %ig | 0,19 |
| Wasser | 4,86 |
| Rhoplex® AC-347 (Rohm & Haas) [Bindemittel, Acrylatdispersion] | 44,94 |
| Rhopaque® OP-96 (Rohm & Haas) [Füllstoffdispersion] | 4,16 |
| Texanol® (Eastman Kodak) | 2,12 |
| Triton® GM-7M (Rohm & Haas) [Netzmittel] | 0,15 |
| TEGO® Foamex 805 (Goldschmidt, Tego Chemie Service) [Polyethersiloxan-Entschäumer] | 0,29 |
| Erfindungsgemäßer Verdicker (Formulierung B) | 1,10 |
| Wasser | 13,38 |
| Gesamt | 100 |

Diese Formulierung wird in der dem Fachmann geläufigen Art und Weise hergestellt. Dazu werden die Komponenten in der Reihenfolge, wie in Tabelle 5 angegeben, mittels einer Dispergierscheibe bei 1.000 Upm innerhalb von 30 Minuten homogen vermischt.

Die Bautenfarbe auf Basis von Rhoplex® AC-347 (Rohm & Haas) wird also wie beschrieben mit der genannten Menge an Verdickungsmittel modifiziert. Nach einem Tag Ruhezeit erfolgt die Bestimmung der Viskosität der so erhaltenen Lösungen nach den Angaben des Herstellers im Haake-Viskosimeter RV 12, Meßkörper SV DIN, bei 23°C und 10,3 s-1 und sind in Tabelle 6 in der Maßeinheit mPa*s aufgeführt.

**Tabelle 6:**

| Verdickungsmittel aus Beispiel | Viskosität 10,3*sec⁻¹ | Viskosität 100*sec⁻¹ | Viskosität 600*sec⁻¹ |
|---|---|---|---|
| 1B | 1940 | 1170 | 590 |
| 2B | 2550 | 1380 | 690 |
| 3B | 2610 | 1440 | 735 |
| 4B | 2240 | 1250 | 630 |
| 5B | 635 | 455 | 260 |
| 6B | 990 | 640 | 360 |
| 7B | 1120 | 730 | 390 |
| 8B | 1210 | 795 | 420 |
| 9B | 1360 | 870 | 450 |
| Vergleich: Borchigel® L 75 N(Fa. Borchers) | 1580 | 900 | 495 |
| Vergleich: Acrysol® RM 8 (Fa. Rohm & Haas) | 1900 | 1360 | 594 |

Das beschriebene Verdickungsmittel ist nicht auf die beschriebenen Anwendungen beschränkt. Es eignet sich des weiteren gleichermaßen für wässrige Lederbeschichtungen und für weitere wässrige Industrielacke.

## Patentansprüche

1. Verzweigte Polyurethane herstellbar durch Umsetzung von
A) einem oder mehreren mindestens trifunktionellen aliphatischen und/oder aromatischen Isocyanat
mit
B) 90,0 bis 99,8 Val-% einem oder mehreren Polyethern der Struktur
RO(SO)w(BO)x(PO)y(EO)zH
und
C) 0,2 bis 10,0 Val-% mindestens einer der Verbindungen aus der Gruppe
a. Polyethern der Struktur
HO(SO)w'(B0)x'(PO)y'(E0)z'H
b. Polyetherpolydimethylsiloxandiole der Struktur
HO(SO)w'(BO)x'(PO)y'(EO)z'Z-PDMS-
Z(EO)z'(PO)y'(BO)x'(SO)w'OH
c. Polyesterpolydimethylsiloxandiole der Struktur
H- (OC₅H₁₀CO-)y'-Z-PDMS-Z- (CO-C₅H₁₀O-) y'-H
d. Polydimethylsiloxandiolen der Struktur
HO-Y-PDMS-Y-OH
e. Polydimethylsiloxandiaminen der Struktur
R'NH-Y-PDMS-Y-HNR'
f. Polyetherdiaminen der Struktur
R'HN-(PO)y'(EO)z'-X-(EO)z'(PO)y'-NHR'
worin
R ein gegebenenfalls auch substituierter oder funktionalisierter Kohlenwasserstoffrest mit 1 bis 50 Kohlenstoffatomen,
R' Wasserstoff oder ein gegebenenfalls auch substituierter oder funktionaliserter Kohlenwasserstoffrest mit 1 bis 8 Kohlenstoffatomen,
SO = Styrenoxid,
BO = Butylenoxid,
PO = Propylenoxid,
EO = Ethylenoxid,
PDMS = Polydimethylsiloxan
w = 0 bis 5,
x = 0 bis 5,
y = 0 bis 20,
z = 50 bis 200,
w'= 0 bis 5,
x'= 0 bis 5,
y'= 0 bis 10,
z'= 1 bis 49,
Z = -CₙH₂ₙO- oder -CH₂-CH₂-O-CₙH₂ₙO-, mit n = 2 bis 12;
X = -CₙH₂ₙ- oder -C₆H₄-, mit n = 2 bis 12;
Y = -CₘH₂ₘ-, worin
m = 1 bis 8 ist.

2. Polyurethane gemäß Anspruch 1, **dadurch gekennzeichnet, dass** R' ein Wasserstoff, eine Methyl- oder Ethylgruppe darstellt.

3. Polyurethane gemäß Anspruch 1, **dadurch gekennzeichnet, dass** R' ein Wasserstoff darstellt.

4. Polyurethane gemäß Anspruch 1, **dadurch gekennzeichnet, dass** R' ein gegebenenfalls auch substituierter oder funktionaliserter Kohlenwasserstoffrest mit 1 bis 8 Kohlenstoffatomen darstellt.

5. Polyurethane gemäß Anspruch 4, **dadurch gekennzeichnet, dass** R ein gegebenenfalls substituierter Kohlenwasserstoffrest mit 8 bis 22 C-Atomen ist.

6. Polyurethane gemäß Anspruch 4, **dadurch gekennzeichnet, dass** R ein gegebenenfalls substituierter Kohlenwasserstoffrest mit 10 bis 18 C-Atomen ist.

7. Polyurethane gemäß Anspruch 4, **dadurch gekennzeichnet, dass** R ein gegebenenfalls substituierter Kohlenwasserstoffrest mit 16 bis 18 C-Atomen ist.

8. Polyurethane gemäß Anspruch 4, **dadurch gekennzeichnet, dass** die Indices folgende Werte aufweisen:
w = 0 bis 2,
x = 0 bis 3,
y = 0 bis 10,
z = 50 bis 200.

9. Polyurethane gemäß Anspruch 4, **dadurch gekennzeichnet, dass** die Indices folgende Werte aufweisen:
w = 0,
x = 0,
y = 0,
z = 80 bis 150.

10. Polyurethane gemäß Anspruch 4, **dadurch gekennzeichnet, dass** die Indices folgende Werte aufweisen:
w' = 0 bis 2,
x' = 0 bis 2,
y' = 0 bis 10,
z' = 5 bis 30.

11. Polyurethane gemäß Anspruch 4, **dadurch gekennzeichnet, dass** der Index n in Z 2 bis 6 beträgt.

12. Polyurethane gemäß Anspruch 4, **dadurch gekennzeichnet, dass** der Index n in Y 3 bis 6 beträgt.

13. Polyurethane gemäß Anspruch 4, in denen das Triisocyanat ein Abkömmling des Hexamethylendiisocyanates oder des Toluylendiisocyanates oder des Isophorondiisocyanates ist.

14. Polyurethane gemäß Anspruch 4, in denen das Triisocyanat ein Abkömmling des Isophorondiisocyanates ist.

15. Formulierung aus 10 bis 40 Gewichtsteilen eines Polyurethans gemäß einem oder mehreren der Ansprüche 1 bis 14, 0 bis 80 Gewichtsteilen Wasser, 0 bis 30 Gewichtsteilen Colösemittel und 10 bis 80 Gewichtsteilen eines Emulgators der allgemeinen Struktur
R"(SO)w" (BO)x" (PO)y" (EO)z" H,
wobei
R" ein gegebenenfalls auch substituierter Kohlenwasserstoffrest mit 1 bis 22 Kohlenstoffatomen
SO = Styrenoxid,
BO = Butylenoxid,
PO = Propylenoxid,
EO = Ethylenoxid,
w" = 1 bis 5,
x" = 0 bis 5,
y" = 0 bis 5,
z" = 3 bis 30,
sind.

16. Formulierung gemäß Anspruch 15 **dadurch gekennzeichnet, dass** die Indices folgende Werte aufweisen:
w" = 1 bis 3,
x'' = 0,
y" = 0 bis 2,
z" = 5 bis 30.

17. Formulierung gemäß einem oder mehreren der Ansprüche 15 bis 16 **dadurch gekennzeichnet, dass** der Rest R " 4 bis 12 Kohlenstoffatome enthält.

18. Verwendung der Polyurethane gemäß einem oder mehreren der Ansprüche 1 bis 14 zur Verdickung wässriger Systeme.

19. Verwendung der Formulierung gemäß einem oder mehreren der Ansprüche 15 bis 17 zur Verdickung wässriger Systeme.

20. Verwendung der Formulierung gemäß einem oder mehreren der Ansprüche 15 bis 17 zur Verdickung wässriger Lacksysteme.

21. Verwendung der Formulierung gemäß einem oder mehreren der Ansprüche 15 bis 17 zur Verdickung wässriger, dispersionsbasierender Lacksysteme.

## Claims

1. Branched polyurethanes preparable by reacting
A) one or more aliphatic and/or aromatic isocyanates having a functionality of at least three
with
B) from 90.0 to 99.8 eq.% of one or more polyethers of structure
RO (SO) w (BO) x (PO) y (EO) zH
and
C) from 0.2 to 10.0 eq.% of at least one of the compounds from the following group:
a. polyethers of structure
HO(SO)w'(BO)x'(PO)y'(EO)z'H
b. polyether polydimethylsiloxane diols of structure
HO(SO)w'(BO)x'(PO)y'(EO)z'Z-PDMS-
Z(EO)z'(PO)y'(BO)x'(SO)w'OH
c. polyester polydimethylsiloxane diols of structure
H- (OC₅H₁₀CO-) y'-Z-PDMS-Z- (CO-C₅H₁₀O-) y'-H
d. polydimethylsiloxane diols of structure
HO-Y-PDMS-Y-OH
e. polydimethylsiloxane diamines of structure
R'NH-Y-PDMS-Y-HNR'
f. polyether diamines of structure
R'HN-(PO)y'(EO)z'-X-(EO)z'(PO)y'-NHR'
in which
R is a hydrocarbon radical of 1 to 50 carbon atoms which if desired is also substituted or functionalized,
R' is hydrogen or a hydrocarbon radical of 1 to 8 carbon atoms which if desired is also substituted or functionalized,
SO = styrene oxide,
BO = butylene oxide,
PO = propylene oxide,
EO = ethylene oxide,
PDMS = polydimethylsiloxane
w = 0 to 5,
x = 0 to 5,
y = 0 to 20,
z = 50 to 200,
w'= 0 to 5,
x'= 0 to 5,
y'= 0 to 10,
z'= 1 to 49,
Z = -CₙH₂ₙO- or -CH₂-CH₂-O-CₙH₂ₙO-, where
n = 2 to 12;
X = -CₙH₂ₙ- or -C₆H₄-, where
n = 2 to 12;
Y = -CₘH₂ₘ-, in which
m = 1 to 8.

2. Polyurethanes according to Claim 1, **characterized in that** R' is a hydrogen or a methyl or ethyl group.

3. Polyurethanes according to Claim 1, **characterized in that** R' is a hydrogen.

4. Polyurethanes according to Claim 1, **characterized in that** R' is a hydrocarbon radical of 1 to 8 carbon atoms which if desired is also substituted or functionalized.

5. Polyurethanes according to Claim 4, **characterized in that** R is an unsubstituted or substituted hydrocarbon radical having from 8 to 22 carbon atoms.

6. Polyurethanes according to Claim 4, **characterized in that** R is an unsubstituted or substituted hydrocarbon radical having from 10 to 18 carbon atoms.

7. Polyurethanes according to Claim 4, **characterized in that** R is an unsubstituted or substituted hydrocarbon radical having from 16 to 18 carbon atoms.

8. Polyurethanes according to Claim 4, **characterized in that** the indices have the following values:
w = 0 to 2,
x = 0 to 3,
y = 0 to 10,
z = 50 to 200.

9. Polyurethanes according to Claim 4, **characterized in that** the indices have the following values:
w = 0,
x = 0,
y = 0,
z = 80 to 150.

10. Polyurethanes according to Claim 4, **characterized in that** the indices have the following values:
w' = 0 to 2,
x' = 0 to 2,
y' = 0 to 10,
z' = 5 to 30.

11. Polyurethanes according to Claim 4, **characterized in that** the index n in Z is from 2 to 6.

12. Polyurethanes according to Claim 4, **characterized in that** the index n in Y is from 3 to 6.

13. Polyurethanes according to Claim 4, in which the triisocyanate is a derivative of hexamethylene diisocyanate or of tolylene diisocyanate or of isophorone diisocyanate.

14. Polyurethanes according to Claim 4, in which the triisocyanate is a derivative of isophorone diisocyanate.

15. Formulation comprising from 10 to 40 parts by weight of a polyurethane according to one or more of Claims 1 to 14, from 0 to 80 parts by weight of water, from 0 to 30 parts by weight of cosolvent and from 10 to 80 parts by weight of emulsifier of the general structure
R" (SO)w" (BO)x'' (PO)y'' (EO)z''H,
where
R" is a hydrocarbon radical having from 1 to 22 carbon atoms, which if desired is also substituted,
SO =styrene oxide,
BO =butylene oxide,
PO =propylene oxide,
EO =ethylene oxide,
w" = 1 to 5,
x" = 0 to 5,
y" = 0 to 5,
z" = 3 to 30.

16. Formulation according to Claim 15, **characterized in that** the indices have the following values:
w" = 1 to 3,
x" = 0,
y" = 0 to 2,
z" = 5 to 30.

17. Formulation according to either or both of Claims 15 and 16, **characterized in that** the radical R" contains from 4 to 12 carbon atoms.

18. Use of the polyurethanes according to one or more of Claims 1 to 14 for thickening aqueous systems.

19. Use of the formulation according to one or more of Claims 15 to 17 for thickening aqueous systems.

20. Use of the formulation according to one or more of Claims 15 to 17 for thickening aqueous coating systems.

21. Use of the formulation according to one or more of Claims 15 to 17 for thickening aqueous, dispersion-based coating systems.

## Revendications

1. Polyuréthannes ramifiés, pouvant être préparés par mise en réaction de
A) un ou plusieurs isocyanates aliphatiques et/ou aromatiques au moins trifonctionnels
avec
B) 90,0 à 99,8 % en val d'un ou plusieurs polyéthers de structure
RO(SO)_{w}(BO)ₓ(PO)y(EO)_{z}H
et
C) 0,2 à 10,0 % en val d'au moins l'un des composés choisis dans le groupe constitué par
(a) des polyéthers de structure
HO(SO)_{w'} (BO)_{x'} (PO)_{y'} (EO)_{z'}H
(b) des polyétherpolydiméthylsiloxanediols de structure
H(SO)_{w'}(BO)_{x'}(PO)_{y'}(EO)_{z'}Z-PDMS-
Z(EO)_{z'}(PO)_{y'}(BO)_{x'}(SO)_{w'}OH
(c) des polyesterpolydiméthylsiloxanediols de structure
(H) - (OC₅H₁₀CO-)_{y'}-Z-PDMS-Z- (CO-C₅H₁₀O-)_{y'} -H
(d) des polydiméthylsiloxanediols de structure
HO-Y-PDMS-Y-OH
(e) des polydiméthylsiloxanediamines de structure
R'NH-Y-PDMS-Y-HNR'
(f) des polyétherdiamines de structure
R'HN-(PO)_{y'}(EO)_{z'}-X-(EO)_{z'}(PO)_{y'}-NHR'
dans lesquels
R représente un radical hydrocarboné éventuellement également substitué ou fonctionnalisé, ayant de 1 à 50 atomes de carbone,
R' représente un atome d'hydrogène ou un radical hydrocarboné éventuellement également substitué ou fonctionnalisé, ayant de 1 à 8 atomes de carbone,
SO = oxyde de styrène,
BO = oxyde de butylène,
PO = oxyde de propylène,
EO = oxyde d'éthylène,
PDMS = polydiméthylsiloxane,
w vaut de 0 à 5,
x vaut de 0 à 5,
y vaut de 0 à 20,
z vaut de 50 à 200,
w' vaut de 0 à 5,
x' vaut de 0 à 5,
y' vaut de 0 à 10,
z' vaut de 1 à 49,
Z représente -CₙH₂ₙO- ou -CH₂-CH₂-O-C₂H₂ₙO-,
où n = 2 à 12,
X représente -CₙH₂ₙ- ou -C₆H₄-,
où n = 2 à 12,
Y représente -CₘH₂ₘ-,
où m = 1 à 8.

2. Polyuréthannes selon la revendication 1, **caractérisés en ce que** R' représente un atome d'hydrogène, un groupe méthyle ou éthyle.

3. Polyuréthannes selon la revendication 1, **caractérisés en ce que** R' représente un atome d'hydrogène.

4. Polyuréthannes selon la revendication 1, **caractérisés en ce que** R' représente un radical hydrocarboné ayant de 1 à 8 atomes de carbone, éventuellement également substitué ou fonctionnalisé.

5. Polyuréthannes selon la revendication 4, **caractérisés en ce que** R est un radical hydrocarboné ayant de 8 à 22 atomes de carbone, éventuellement substitué.

6. Polyuréthannes selon la revendication 4, **caractérisés en ce que** R est un radical hydrocarboné ayant de 10 à 18 atomes de carbone, éventuellement substitué.

7. Polyuréthannes selon la revendication 4, **caractérisés en ce que** R est un radical hydrocarboné ayant de 16 à 18 atomes de carbone, éventuellement substitué.

8. Polyuréthannes selon la revendication 4, **caractérisés en ce que** les indices ont les valeurs suivantes :
w = 0 à 2,
x = 0 à 3,
y = 0 à 10,
z = 50 à 200.

9. Polyuréthannes selon la revendication 4, **caractérisés en ce que** les indices ont les valeurs suivantes :
w = 0,
x = 0,
y = 0,
z = 80 à 150.

10. Polyuréthannes selon la revendication 4, **caractérisés en ce que** les indices ont les valeurs suivantes :
w' = 0 à 2,
x' = 0 à 2,
y' = 0 à 10,
z' = 5 à 30.

11. Polyuréthannes selon la revendication 4, **caractérisés en ce que** l'indice n dans Z vaut de 2 à 6.

12. Polyuréthannes selon la revendication 4, **caractérisés en ce que** l'indice n dans Y vaut de 3 à 6.

13. Polyuréthannes selon la revendication 4, dans lesquels le triisocyanate est un dérivé de l'hexaméthylène-diisocyanate ou du toluylène-diisocyanate ou de l'isophorone-diisocyanate.

14. Polyuréthannes selon la revendication 4, dans lesquels le triisocyanate est un dérivé de l'isophorone-diisocyanate.

15. Composition constituée de 10 à 40 parties en poids d'un polyuréthanne selon une ou plusieurs des revendications 1 à 14, de 0 à 80 parties en poids d'eau, de 0 à 30 parties en poids de co-solvant et de 10 à 80 parties en poids d'un émulsifiant de structure générale
R" (SO)_{w"} (BO)_{x"} (PO) _{y"} (EO)_{z"}H,
dans laquelle
R" représente un radical hydrocarboné éventuellement également substitué, ayant de 1 à 22 atomes de carbone,
SO = oxyde de styrène,
BO = oxyde de butylène,
PO = oxyde de propylène,
EO = oxyde d'éthylène,
w" vaut de 1 à 5,
x" vaut de 0 à 5,
y" vaut de 0 à 5,
z" vaut de 3 à 30.

16. Composition selon la revendication 15, **caractérisée en ce que** les indices ont les valeurs suivantes :
w" = 1 à 3,
x" = 0
y" vaut de 0 à 2,
z" vaut de 5 à 30.

17. Composition selon une ou plusieurs des revendications 15 et 16, **caractérisée en ce que** le radical R" contient de 4 à 12 atomes de carbone.

18. Utilisation des polyuréthannes selon une ou plusieurs des revendications 1 à 14, pour l'épaississement de systèmes aqueux.

19. Utilisation de la composition selon une ou plusieurs des revendications 15 à 17, pour l'épaississement de systèmes aqueux.

20. Utilisation de la composition selon une ou plusieurs des revendications 15 à 17, pour l'épaississement de systèmes de peinture aqueux.

21. Utilisation de la composition selon une ou plusieurs des revendications 15 à 17, pour l'épaississement de systèmes de peinture aqueux à base de dispersion.
